# EUROPEAN PATENT SPECIFICATION

(11) **EP 2 788 885 B1**
(45) Date of publication and mention of the grant of the patent: **26.06.2019**
(21) Application number: 12855366.6
(22) Date of filing: 30.10.2012
(51) Int. Cl.: G06F 15/16, G06F 3/14, G06Q 10/10, H04L 29/08, H04W 4/12, H04W 4/00

(54) **SYSTEM AND METHOD OF PAGE SHARING BY A DEVICE**
SYSTEM UND VERFAHREN ZUR FREIGABE VON SEITEN DURCH EINE VORRICHTUNG
SYSTÈME ET PROCÉDÉ DE PARTAGE DE PAGE PAR UN DISPOSITIF

(30) Priority: 06.12.2011 KR 20110129912; 17.07.2012 KR 20120077924
(43) Date of publication of application: 15.10.2014
(60) Divisional application: 19173478.9
(73) Proprietor: Samsung Electronics Co., Ltd., Suwon-si, Gyeonggi-do 443-742 (KR)
(72) Inventor: JUNG, Ji-su, Goesan-gun Chungcheongbuk-do 367-802 (KR); PARK, Min-jung, Suwon-si Gyeonggi-do 443-727 (KR); PARK, Yong-gook, Yongin-si Gyeonggi-do 446-581 (KR); LEE, Bum-joo, Yongin-si Gyeonggi-do 446-784 (KR); JANG, Say, Yongin-si Gyeonggi-do 446-909 (KR); HONG, Seung-hwan, Suwon-si Gyeonggi-do 441-822 (KR)
(74) Representative: HGF Limited
(86) International application number: PCT/KR2012/008968
(87) International publication number: WO 2013/085146

(56) References cited:
- EP-A2- 2 237 139
- KR-A- 20070 034 014
- KR-A- 20090 076 104
- KR-A- 20100 114 407
- US-A- 5 726 669
- US-A- 5 781 785
- US-A1- 2009 125 586
- US-A1- 2009 177 810
- US-A1- 2009 197 635
- US-A1- 2010 182 248
- US-B2- 6 765 559
- US-B2- 7 533 349

## Description

### Technical Field

The present invention relates generally to systems and methods of sharing pages between devices, and more particularly, to a system and method of sharing pages displayed on a plurality of devices among the devices.

### Background Art

A technique for sharing data between a plurality of devices or controlling other devices in the plurality of devices has been developed with the development of networking technology and techniques for sharing pages between a plurality of devices have recently attracted attention. In a page sharing technique, the entire screen or a shared region screen of a specific region of a host device is transmitted to a master device in real time, whereby a user of the master device may use the host device.

In this page sharing, when a plurality of devices share screens with one another, a technique in which each device effectively displays and uses a screen of another device is needed.

Document US7533349B2 discloses methods for sharing a remote desktop and a local page (application) on a user's device.

### Disclosure of Invention

### Solution to Problem

The embodiments are set out in the appended set of claims; further examples called embodiments or aspects of the present invention in the description are illustrative examples, not embodiments claimed in the present application.

Accordingly, certain embodiments of the present invention have been made to solve the above-mentioned problems, and to provide at least the advantages described below. An aspect of the present invention provides a system and method of sharing a page between devices, by which the devices can share pages.

Certain embodiments of the present invention also provide a system and method of sharing a page between devices, by which a device can effectively display a page of another device on a screen of the former device.

Certain embodiments of the present invention also provide a system and method of sharing a page between devices, by which the devices can effectively share content via a page shared between the devices.

### Brief Description of Drawings

The above and other aspects, features and advantages of the present invention will be more apparent from the following detailed description taken in conjunction with the accompanying drawings in which:
FIG. 1 is a diagram illustrating an example of page sharing between devices, according to an embodiment of the present invention;
FIG. 2 is a block diagram of a structure of a first device among the devices illustrated in FIG. 1, according to an embodiment of the present invention;
FIG. 3 is a block diagram of a structure of a content sharing unit included in the first device illustrated in FIG. 2, according to an embodiment of the present invention;
FIG. 4 is a diagram illustrating an example in which the first device requests a device C to share a page, according to an embodiment of the present invention;
FIG. 5 is a diagram illustrating an example in which the device C accepts the page sharing request made by the first device, according to an embodiment of the present invention;
FIG. 6 is a diagram illustrating an example in which the first device displays a page of the first device itself and a page of a second device from among the devices illustrated in FIG. 1, according to an embodiment of the present invention;
FIG. 7 is a diagram illustrating an example of arrangement of pages of first, second, and third devices illustrated in FIG. 1, according to an embodiment of the present invention;
FIG. 8 is a diagram illustrating an example of arrangement of pages of the first, second, and third devices, according to an embodiment of the present invention;
FIG. 9 is a diagram illustrating an example of arrangement of pages of the first, second, and third devices, according to an embodiment of the present invention;
FIG. 10 is a diagram illustrating an example in which a plurality of pages of the first device and a plurality of pages of the second device are displayed on the screen of the first device, according to an embodiment of the present invention;
FIG. 11 is a diagram illustrating an example in which content is provided to the second device by using a content list included in a page of the first device;
FIG. 12 is a diagram illustrating an example in which a played image and a played sound of content being played on a page of the first device are provided to the second device;
FIG. 13 is a diagram illustrating an example in which the first device receives content from the second device by using a content list included in a page of the second device;
FIG. 14 is a flowchart of a method of sharing a page between devices, according to an embodiment of the present invention;
FIG. 15 is a diagram illustrating an example in which an object included in a page of the second device displayed on the screen of the first device is shared, according to an embodiment of the present invention;
FIG. 16 is a diagram illustrating an example in which the second device sets a shared page, according to an embodiment of the present invention; and
FIG. 17 is a schematic diagram of a system for sharing pages between devices, according to an embodiment of the present invention.
FIG. 18 is a diagram illustrating an example in which the first device transmits data to the second device via short range communication;
FIG. 19 is a diagram illustrating an example in which content is moved to a page of the second device displayed on the screen of the first device, according to an embodiment of the present invention;
FIG. 20 is a diagram illustrating an example in which payment information is moved to the page of the second device displayed on the screen of the first device, according to an embodiment of the present invention; and
FIG. 21 is a diagram illustrating an example in which a page of the first device and the page of the second device are displayed on the screen of the first device, and data related to a predetermined icon selected in the page of the first device is transmitted to the second device.

### Best Mode for Carrying out the Invention

In accordance with a first aspect of the present invention, there is provided a method according to claim 1.

In accordance with a second aspect of the present invention, there is provided a first device according to claim 7.

According to a third aspect of the present invention, there is provided a computer readable recording medium having recorded thereon a computer program for executing a method according to the first aspect of the present invention.

Also disclosed is a method by which a first device shares a page with a second device, including receiving a page of the second device, arranging a screen of the first device and the received page of the second device, and displaying the arranged pages of the first and second devices, wherein, in the displaying, when the page of the first device is flicked or dragged, the page of the second device is displayed on a screen of the first device.

Also disclosed is a first device shares a page with a second device, and the first device includes a shared page receiving unit which receives a page of the second device, a page arrangement unit which arranges a page of the first device and the received page of the second device, and a display unit which displays the arranged pages of the first and second devices, wherein, when the page of the first device is moved, the display unit displays the page of the second device on a screen of the first device.

Also disclosed is a computer readable recording medium having recorded thereon a computer program for executing a method by which a first device shares a page with a second device, including receiving a page of the second device, arranging a page of the first device and the received page of the second device, and displaying the arranged pages of the first and second devices, wherein, in the displaying, when the page of the first device is flicked or dragged, the page of the second device is displayed on a screen of the first device.

### Mode for the Invention

The present invention is described in detail by explaining various embodiments of the invention with reference to the accompanying drawings, in which aspects of the present invention are illustrated. The invention may, however, be embodied in many different forms and should not be construed as being limited to the embodiments set forth herein. In the drawings, parts irrelevant to the description are omitted to avoid obscuring the subject matter of the present invention and like reference numbers refer to like elements throughout the drawings.

In the following description, an element referred to as being "connected" to another element can be directly connected to the other element or may be connected through intervening elements.

The term "object'" refers to an object to be selected by a user. Examples of an object are a picture, text, and a moving picture, for example, an icon, a link, and a played picture of content.

The term "page" refers to a space including an object. A page is displayed on the screen of a device, and examples of a page are a wallpaper page in which icons for executing an application are displayed, a web page, a content list page, and a played page of content.

The term "tap" refers to an action of a user very quickly touching a screen with a fingertip or a stylus. That is, it indicates an action by which a difference between a touching-in time, i.e., a time at which the fingertip or stylus touches the screen, and a touching-out time, i.e., a time at which the fingertip or the stylus is no longer touching the screen is very short, that is, less than or equal to a threshold time period.

The term "touch & hold" refers to an action in which a user maintains a touch input for more than a threshold time period after touching a screen with a fingertip or a stylus. That is, it indicates an action by which a time difference between a touching-in time and a touching-out time is greater than the threshold time period. To allow the user to determine whether a touch input is a tap or a touch & hold, when the touch input is maintained for more than the threshold time period, a feedback signal may be provided visually or audibly.

The term "double tap" refers to an action of a user quickly touching a screen twice with a fingertip or a stylus. That is, a user taps a screen twice in short successions.

The term "drag" refers to an action of a user touching a screen with a fingertip or a stylus and moving the fingertip or stylus to other positions on the screen while touching the screen.

The term "flick" refers to an action of a user very quickly performing a drag action with a fingertip or a stylus. A flick action may be differentiated from a drag action based on whether the speed of movement of the fingertip or the stylus is greater than a threshold speed.

The term "pinch input" refers to an action of a user touching a screen with a plurality of fingertips or styluses and widening or narrowing a distance between the plurality of fingertips or styluses while touching the screen.

The term "unpinching" refers to an action of the user touching the screen with two fingers, such as a thumb and a forefinger, and widening a distance between the two fingers while touching the screen, and "pinching" refers to an action of the user touching the screen with two fingers and narrowing a distance between the two fingers while touching the screen. For example, when an unpinching input is received, a page may be zoomed out, and when pinching input is received, a page may be zoomed in.

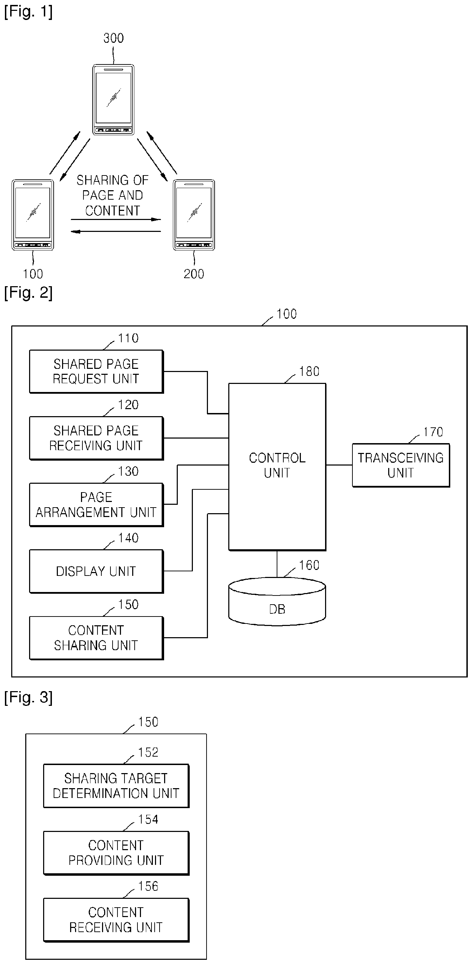

FIG. 1 is a diagram illustrating an example of page sharing among devices, according to an embodiment of the present invention.

Referring to FIG. 1, a plurality of devices, namely, first, second, and third devices 100, 200, and 300, shares pages with one another. The first device 100 requests the second device 200 and the third device 300 to share pages. When the second device 200 and the third device 300 accept the request to share pages, the first device 100 receives a page of the second device 200 and a page of the third device 300 and displays the pages on the page of the first device 100. In this case, pages of the first device 100, the second device 200, and the third device 300 are arranged in a plurality of directions according to a preset criterion, and a page displayed on the screen of the first device 100 may be switched with another page of the first device 100, a page of the second device 200, or a page of the third device 300 by dragging or flicking.

The first device 100 controls operations of the second device 200 and the third device 300 by using the pages of the second and third devices 200 and 300 displayed on the screen of the first device 100.

The first device 100 provides content included in the first device 100 or a played image of the content to the second device 200 and the third device 300 by using the pages of the second and third devices 200 and 300 displayed on the screen of the first device 100. The first device 100 receives content included in the second and third devices 200 and 300 and played images of the contents by using the pages of the second and third devices 200 and 300 displayed on the screen of the first device 100.

Although it is described herein that the first device 100 receives pages and the second device 200 and the third device 300 provide pages, alternatively the first to third devices 100 to 300 may provide pages to and receive pages from one another.

The first device 100 is described in greater detail with reference to FIG. 2.

FIG. 2 is a block diagram of a structure of the first device 100, according to an embodiment of the present invention.

Referring to FIG. 2, the first device 100 includes a shared page request unit 110, a shared page receiving unit 120, a page arrangement unit 130, a display unit 140, a content sharing unit 150, a Database (DB) 160, a transceiving unit 170, and a control unit 180.

The shared page request unit 110 requests a page of the second device 200 from the second device 200. The shared page request unit 110 requests a page displayed on the screen of the second device 200. When the second device 200 is selected from a device list displayed on the screen of the first device 100, the shared page request unit 110 requests the second device 200 for a page. Also, as the first device 100 approaches the second device 200, the shared screen request unit 110 may request the page of the second device 200 from the second device 200.

When the shared page request unit 110 requests a shared page, the shared page request unit 110 provides the second device 200 with an Identification (ID) value of the first device 100. The ID value of the first device 100 includes, but is not limited thereto, a MAC address, a Service Set Identifier (SSID), a telephone number, and a user ID of the first device 100.

The shared page request unit 110 requests the second device 200 for a shared page via a Short Message Service (SMS) and a Multi-Media Message Service (MMS), but the present invention is not limited to an SMS and an MMS. The shared page request unit 110 may broadcast a request for a shared page to the second device 200.

The shared page receiving unit 120 receives a page displayed on the screen of the second device 200 from the second device 200. The second device 200 allows page sharing in response to the page request of the first device 100, and the shared page receiving unit 120 receives a sharing-allowed page from the second device 200. The shared page receiving unit 120 receives a plurality of pages of the second device 200 from the second device 200.

Specifically, the shared page receiving unit 120 receives image data about the pages of the second device 200 which is sent to a display unit (not shown) of the second device 200, from the second device 200. The shared page receiving unit 120 also receives image data about the pages of the second device 200 which has been screen-captured in the second device 200, from the second device 200. The shared page receiving unit 120 also receives moving picture data about the pages of the second device 200 which has been encoded in units of preset time in the second device 200, from the second device 200. In this case, the shared page receiving unit 120 receives the moving picture data about the pages of the second device 200 in a streaming manner.

The second device 200 sets sharing-allowed pages separately. In this case, the shared page receiving unit 120 receives only sharing-allowed pages from among pages of the second device 200 from the second device 200.

In addition, some of application icons displayed on a page of the second device 200 are shared. In this case, only icons of sharing-allowed applications are included in the page of the second device 200 received by the shared page receiving unit 120.

The shared page receiving unit 120 receives an Acknowledgement (ACK) signal allowing page sharing from the second device 200, and stands by to receive a page displayed on the screen of the second device 200 based on the received ACK signal.

Also, as the first device 100 approaches the second device 200, the shared screen receiving unit 120 may receive the page of the second device 200 from the second device 200 via near field communication (NFC), but an embodiment is not limited thereto. Also, the page of the second device 200 received from the second device 200 may be a home screen of the second device 200 or a page currently displayed on the screen of the second device 200, but an embodiment is not limited thereto. The page of the second device 200 may be newly generated as the first device 100 approaches the second device, and the page of the second device 200 may include information related to data to be provided to the second device 200. For example, when the second device 200 is a point of sales (POS) terminal in a store and the first device 100 contacts the second device 200 in a short range, the page of the second device 200 is newly generated, and information about a name and price of a product may be included in the page of the second device 200, as information related to payment information.

The page arrangement unit 130 arranges pages of the first device 100 and pages of the second device 200. The page arrangement unit 130 arranges a plurality of pages of the first device 100 in a first direction, arrange a plurality of pages of the second device 200 in the first direction, and arrange an array of the pages of the first device 100 and an array of the pages of the second device 200 in a second direction.

For example, the page arrangement unit 130 arranges a plurality of pages of the first device 100 in a horizontal direction, arrange a plurality of pages of the second device 200 in the horizontal direction, and arrange the horizontal arrays of the pages of the first and second devices 100 and 200 in a vertical direction. In this case, when a page of the first device 100 displayed on the screen of the first device 100 is dragged or flicked in the horizontal direction, another page of the first device 100 is displayed on the screen of the first device 100. When a page of the first device 100 displayed on the screen of the first device 100 is dragged or flicked in the vertical direction, a page of the second device 200 is displayed on the screen of the first device 100.

For example, the page arrangement unit 130 arranges a plurality of pages of the first device 100 in the vertical direction, arrange a plurality of pages of the second device 200 in the vertical direction, and arrange the vertical arrays of the pages of the first and second devices 100 and 200 in the horizontal direction.

In this case, when a page of the first device 100 displayed on the screen of the first device 100 is dragged or flicked in the vertical direction, another page of the first device 100 is displayed on the screen of the first device 100. When a page of the first device 100 displayed on the screen of the first device 100 is dragged or flicked in the horizontal direction, a page of the second device 200 is displayed on the screen of the first device 100.

For example, the page arrangement unit 130 arranges a plurality of pages of the first device 100 in a horizontal direction, arrange a plurality of pages of the second device 200 in the horizontal direction, and arrange the horizontal arrays of the pages of the first and second devices 100 and 200 in a diagonal direction.

In this case, when a page of the first device 100 displayed on the screen of the first device 100 is dragged or flicked in the horizontal direction, another page of the first device 100 is displayed on the screen of the first device 100. When a page of the first device 100 displayed on the screen of the first device 100 is dragged or flicked in the diagonal direction, a page of the second device 200 is displayed on the screen of the first device 100.

The display unit 140 displays the pages of the first and second devices 00 and 200 on the screen of the first device 100. The display unit 140 displays a single page on the screen of the first device 100. When the displayed page is dragged or flicked, the display unit 140 displays a page other than the displayed page on the screen of the first device 100.

The display unit 140 displays a page of the first device 100. When the displayed page of the first device 100 is dragged or flicked in the first direction, another page of the first device 100 is displayed on the screen of the first device 100. When the displayed page of the first device 100 is dragged or flicked in the second direction, a page of the second device 200 is displayed on the screen of the first device 100.

The display unit 140 displays both the page of the first device 100 and the page of the second device 200 on the screen of the first device 100. For example, when the displayed page of the first device 100 is zoomed out by unpinching, the display unit 140 displays an image including the pages of the first and second devices 100 and 200 arranged together thereon on the screen of the first device 100.

Accordingly, a user controls an operation of the second device 200 by using the page of the second device 200 displayed on the first device 100 and provides content of the first device 100 to the second device 200 or receive content of the second device 200 from the second device 200.

Also, the display unit 140 may display the page of the second device 200 on a part of the screen of the first device 100. Also, the display unit 140 may display a plurality of icons indicating types of content that may be transmitted to the second device 200 on another part of the screen of the first device 100. For example, the page of the second device 200 may be displayed on the top of the screen of the first device 100, and an icon for transmitting payment information, an icon for transmitting a music file, and an icon for transmitting a web page may be disposed at the bottom of the screen of the first device 100.

The content sharing unit 150 shares the content of the first device 100 and the content of the second device 200. The content sharing unit 150 shares content according to a user input made based on the pages of the first and second devices 100 and 200 displayed on the screen of the first device 100.

The content sharing unit 150 provides the content of the first device 100 to the second device 200 or receive the content of the second device 200 from the second device 200. The content sharing unit 150 provides an image or sound of content being played back in the first device 100 to the second device 200 or receive an image or sound of content being played back in the second device 200 from the second device 200.

The content sharing unit 150 will be described in more detail with reference to FIG. 3 which will be described later.

The DB 160 stores various information so that the first device 100 shares a page and content with the second device 200. The DB 160 stores setting values regarding page arrangement, setting values regarding a page to be shared, and the like.

The transceiving unit 170 transmits various kinds of information for sharing pages and contents to and receives the same from the second device 200.

The control unit 180 controls the shared page request unit 110, the shared page receiving unit 120, the page arrangement unit 130, the content sharing unit 150, the display unit 140, the DB 160, and the transceiving unit 170 so that the first device 100 shares pages and contents with the second device 200.

Although it has been described above that the first device 100 receives a page from the second device 200 and shares the received page with the second device 200, alternatively, the first device 100 receives pages from the third device 300, and provides pages to the second device 200 and the third device 300.

A detailed structure of the content sharing unit 150 is described with reference to FIG. 3.

FIG. 3 is a block diagram of a structure of the content sharing unit 150, according to an embodiment of the present invention.

Referring to FIG. 3, the content sharing unit 150 includes a sharing target determination unit 152, a content providing unit 154, and a content receiving unit 156.

The sharing target determination unit 152 determines content which is to be shared and a device which is to provide the content, based on a user's input made through a page displayed on the screen of the first device 100. The sharing target determination unit 152 determines whether to provide content of the first device 100 to the second device 200 or receive content of the second device 200 from the second device 200.

When an object displayed on a page of the first device 100 is selected and moved to a page of the second device 200, the sharing target determination unit 152 determines to provide the selected object to the second device 200.

For example, when content displayed on a page of the first device 100 is selected and moved to a page of the second device 200, the sharing target determination unit 152 determines that the selected object is to be provided to the second device 200.

For example, when content being played back on a page of the first device 100 is selected and moved to a page of the second device 200, the sharing target determination unit 152 determines that a played image of the selected content is to be provided to the second device 200.

On the other hand, when content displayed on a page of the second device 200 is selected and moved to a page of the first device 100, the sharing target determination unit 152 determines that the selected content is to be received from the second device 200.

For example, when content being played back on a page of the second device 200 is selected and moved to a page of the first device 100, the sharing target determination unit 152 determines that a played image of the selected content is to be received from the second device 200.

The content providing unit 154 provides the second device 200 with the content of the first device 100. The content providing unit 154 provides the second device 200 with the content of the first device 100, based on a user input made through a page displayed on the screen of the first device 100.

The content providing unit 154 provides a content file of the first device 100 to the second device 200 or provide the second device 200 with information about a link from which content is downloadable. The content providing unit 154 provides a played image and a played sound of content being played back in the first device 100 to the second device 200.

The content receiving unit 156 receives the content of the second device 200 from the second device 200. The content receiving unit 156 receives content of the second device 200 from the second device 200, based on a user input made through a page displayed on the screen of the first device 100. Specifically, when an object is selected from a page of the second device 200 displayed on the screen of the first device 100, the content receiving unit 156 provides a coordinate of the selected object to the second device 200, and the second device 200 provides content corresponding to the coordinate of the selected object to the first device 100. The content receiving unit 156 also provides a control command together with the coordinate of the selected object to the second device 200. When an object is selected from a page of the second device displayed on the screen of the first device 100, the content receiving unit 156 informs the second device 200 of generation of an event.

The content receiving unit 156 receives a content file of the second device 200 from the second device 200 or receive information about a link from which content is downloadable from the second device 200. The content receiving unit 156 plays back content of the second device 200 and receive a played image and a played sound of the content being played back from the second device 200.

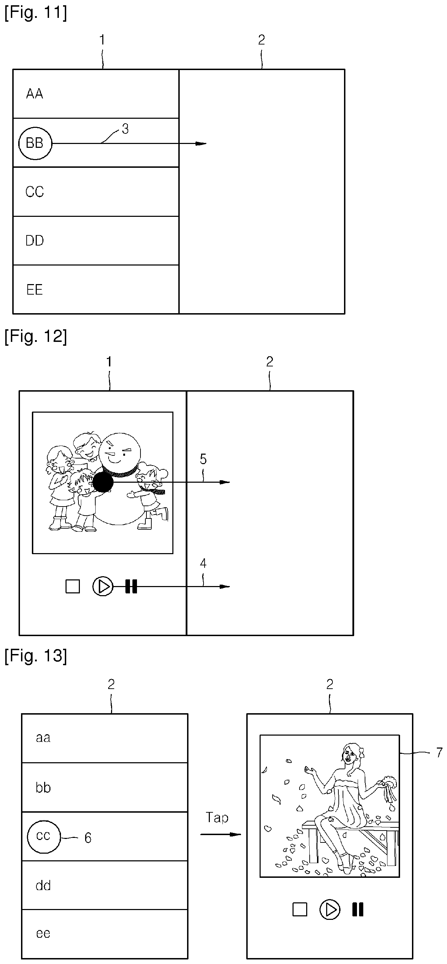

An example in which the content providing unit 154 and the content receiving unit 156 share content with the second device 200 will be described later with reference to FIGS. 11-13.

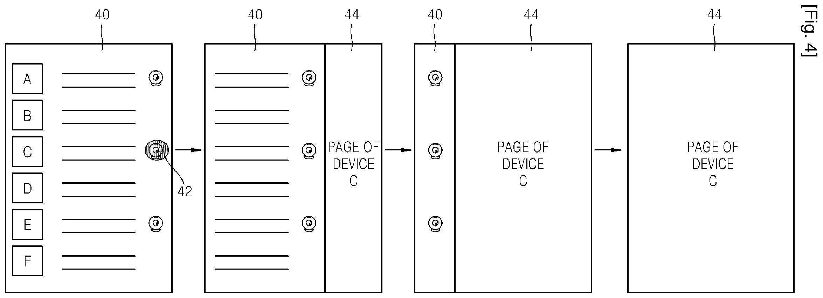

An example in which the first device 100 requests page sharing is described with reference to FIG. 4.

FIG. 4 is a diagram illustrating an example in which the first device 100 requests page sharing, according to an embodiment of the present invention.

Referring to FIG. 4, a page 40 of the first device 100 displayed on the screen of the first device 100 includes a list of other devices with which the first device 100 can share pages. When a user selects a device C with which the first device 100 is to share a page, a page 44 of the device C is displayed on the screen of the first device 100.

For example, when an icon 42 for page sharing with the device C is selected on the page 40 of the first device 100 displayed on the screen of the first device 100 by tapping, the first device 100 receives a page 44 of the device C from the device C. The received page 44 of the device C is gradually expanded from the right side of the screen of the first device 100 and then displayed.

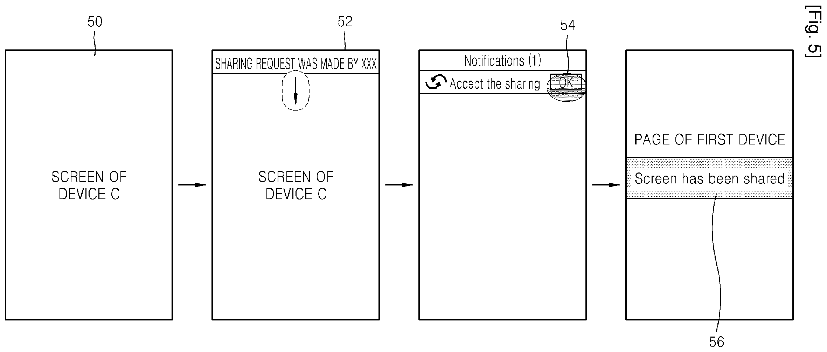

An example in which the device C accepts a request for page sharing is described with reference to FIG. 5.

FIG. 5 is a diagram illustrating an example in which the device C allows page sharing, according to an embodiment of the present invention.

Referring to FIG. 5, when the first device 100 requests the device C to share a page, a message 52 informing a request for page sharing is displayed on an upper end of a screen 50 of the device C. When a user drags down the message 52, informing a request for page sharing, a message 54 for determining whether to accept the request for page sharing is displayed. When a user selects an icon for accepting the request for page sharing, a message 56 informing that the first device 100 and the device C share a page with each other is displayed.

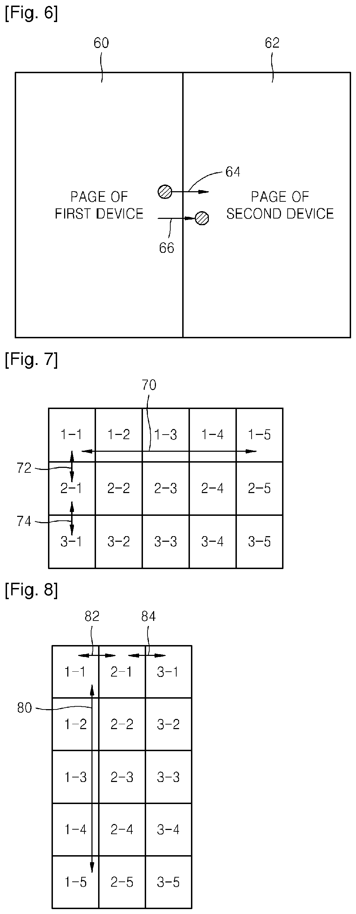

An example in which a page of the first device 100 and a page of the second device 200 are displayed on the first device 100 is described with reference to FIG. 6.

FIG. 6 is a diagram illustrating an example of display of a page 60 of the first device 100 and a page 62 of the second device 200 on the first device 100, according to an embodiment of the present invention.

Referring to FIG. 6, when the page 60 of the first device 100 and the page 62 of the second device 200 are arranged adjacent to each other and the page 60 of the first device 100 displayed on the screen of the first device 100 is selected and slid as indicated by arrow 64, the page 62 of the second device 200 is displayed on the screen of the first device 100.

On the other hand, when the page 60 of the first device 100 and the page 62 of the second device 200 are arranged adjacent to each other and the page 62 of the second device 200 displayed on the screen of the first device 100 is selected and slid as indicated by arrow 66, the page 60 of the first device 100 is displayed on the screen of the first device 100.

A page is selected by a touch input and slid by a drag or flick input, but the page selection and the page movement are not limited thereto.

When the page 60 of the first device 100 displayed on the screen of the first device 100 is selected and moved in a direction opposite to the page 62 of the second device 200, the page 62 of the second device 200 is displayed on the screen of the first device 100. When the page 62 of the second device 200 displayed on the screen of the first device 100 is selected and moved in a direction opposite to the page 60 of the first device 100, the page 60 of the first device 100 is displayed on the screen of the first device 100.

An example in which pages of the first, second, and third device 100, 200, and 300 are arranged is described with reference to FIGS. 7-9.

FIG. 7 is a diagram illustrating an example of arrangement of pages of the first, second, and third devices 100, 200, and 300, according to an embodiment of the present invention.

Referring to FIG. 7, a plurality of pages 1-1, 1-2, 1-3, 1-4, and 1-5 of the first device 100 is arranged in a horizontal direction, a plurality of pages 2-1, 2-2, 2-3, 2-4, and 2-5 of the second device 200 is arranged in the horizontal direction, and a plurality of pages 3-1, 3-2, 3-3, 3-4, and 3-5 of the third device 300 is arranged in the horizontal direction.

The horizontal array of the pages 1-1, 1-2, 1-3, 1-4, and 1-5 of the first device 100, the horizontal array of the pages 2-1, 2-2, 2-3, 2-4, and 2-5 of the second device 200, and the horizontal array of the pages 3-1, 3-2, 3-3, 3-4, and 3-5 of the third device 300 is arranged in a vertical direction.

For example, when the page 1-1 of the first device 100 is displayed on the screen of the first device 100 and moved in a horizontal direction 70 according to a user's input, the other page 1-2, 1-3, 1-4, or 1-5 of the first device 100 is displayed on the screen of the first device 100.

For example, when the page 1-1 of the first device 100 is displayed on the screen of the first device 100 and moved in vertical directions 72 and 74 according to a user's input, the page 2-1 of the second device 200 and the page 3-1 of the third device 300 is displayed on the screen of the first device 100.

FIG. 8 is a diagram illustrating an example of arrangement of pages of the first, second, and third devices 100, 200, and 300, according to an embodiment of the present invention.

Referring to FIG. 8, a plurality of pages 1-1, 1-2, 1-3, 1-4, and 1-5 of the first device 100 are arranged in a vertical direction, a plurality of pages 2-1, 2-2, 2-3, 2-4, and 2-5 of the second device 200 are arranged in the horizontal direction, and a plurality of pages 3-1, 3-2, 3-3, 3-4, and 3-5 of the third device 300 are arranged in the horizontal direction.

The vertical array of the pages 1-1, 1-2, 1-3, 1-4, and 1-5 of the first device 100, the vertical array of the pages 2-1, 2-2, 2-3, 2-4, and 2-5 of the second device 200, and the vertical array of the pages 3-1, 3-2, 3-3, 3-4, and 3-5 of the third device 300 are arranged in a horizontal direction.

For example, when the page 1-1 of the first device 100 is displayed on the screen of the first device 100 and moved in a vertical direction 80 according to a user's input, the other pages 1-2, 1-3, 1-4, and 1-5 of the first device 100 are displayed on the screen of the first device 100.

For example, when the page 1-1 of the first device 100 is displayed on the screen of the first device 100 and moved in horizontal directions 82 and 84 according to a user's input, the page 2-1 of the second device 200 and the page 3-1 of the third device 300 are displayed on the screen of the first device 100.

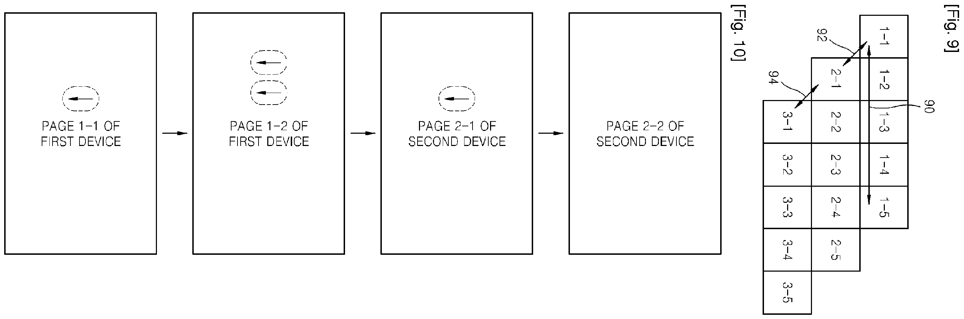

FIG. 9 is a diagram illustrating an example of arrangement of pages of the first, second, and third devices 100, 200, and 300, according to an embodiment of the present invention.

Referring to FIG. 9, a plurality of pages 1-1, 1-2, 1-3, 1-4, and 1-5 of the first device 100 are arranged in a horizontal direction, a plurality of pages 2-1, 2-2, 2-3, 2-4, and 2-5 of the second device 200 are arranged in the horizontal direction, and a plurality of pages 3-1, 3-2, 3-3, 3-4, and 3-5 of the third device 300 are arranged in the horizontal direction.

The horizontal array of the pages 1-1, 1-2, 1-3, 1-4, and 1-5 of the first device 100, the horizontal array of the pages 2-1, 2-2, 2-3, 2-4, and 2-5 of the second device 200, and the horizontal array of the pages 3-1, 3-2, 3-3, 3-4, and 3-5 of the third device 300 are arranged in a diagonal direction.

For example, when the page 1-1 of the first device 100 is displayed on the screen of the first device 100 and moved in a horizontal direction 90 according to a user's input, the other pages 1-2, 1-3, 1-4, and 1-5 of the first device 100 are displayed on the screen of the first device 100.

For example, when the page 1-1 of the first device 100 is displayed on the screen of the first device 100 and moved in diagonal directions 72 and 74 according to a user's input, the page 2-1 of the second device 200 and the page 3-1 of the third device 300 are displayed on the screen of the first device 100.

An example in which a page of the first device 100 and a page of the second device 200 are displayed on the screen of the first device 100 is described with reference to FIG. 10.

An example in which a page of the first device 100 and a page of the second device 200 are displayed on the screen of the first device 100 is described with reference to FIG. 10.

Referring to FIG. 10, a plurality of pages of the first device 100 and a plurality of pages of the second device 200 are switched and displayed on the screen by dragging and flicking.

When a page 1-1 of the first device 100 is displayed on the screen of the first device 100 and dragged or flicked by a touch input, another page 1-2 of the first device 100 is displayed on the screen of the first device 100. When the page 1-2 of the first device 100 is dragged or flicked by a plurality of touch inputs, a page 2-1 of the second device 200 is displayed on the screen. When the page 2-1 of the second device 200 is dragged or flicked by a touch input, another page 2-2 of the second device 200 is displayed on the screen.

When a page is dragged or flicked by a plurality of touch inputs, the page is to be switched with a page previously set according to the number of touch inputs. For example, when a page of the first device 100 is dragged or flicked by n touch inputs, a page of an n-th device is displayed.

A content sharing method according to an embodiment of the present invention is described with reference to FIGS. 11-13.

FIG. 11 is a diagram illustrating an example in which content is provided to the second device 200 by using a content list included in a page of the first device 100.

Referring to FIG. 11, a content list is displayed on a page 1 of the first device 100 displayed on the screen of the first device 100. When content BB is selected from the content list and moved to a page 2 of the second device 200, the first device 100 provides the second device 200 with the content BB. In this case, the first device 100 provides the content BB to the second device 200 or provide the second device 200 with information about a link from which the content BB is downloadable.

FIG. 12 is a diagram illustrating an example in which a played image and a played sound of content being played back on a page of the first device 100 are provided to the second device 200.

Referring to FIG. 12, content is displayed on a page 1 of the first device 100. For example, when an icon for playing back content is selected and moved to a page 2 of the second device 200, the first device 100 provides a played image and a played sound of the content to the second device 200 in a streaming manner.

When an image 5 of the content being played back on the page 1 of the first device 100 is selected and moved to the page 2 of the second device 200, the first device 100 provides the second device 200 with a file of the played content or information about a link from which the played content can be downloaded.

FIG. 13 is a diagram illustrating an example in which the first device 100 receives content from the second device 200 by using a content list included in a page of the second device 200.

As illustrated in FIG. 13, a page 2 of the second device 200 is displayed on the screen of the first device 100, and a content list of the second device 200 is displayed on the page 2 of the second device 200. When content CC 6 is selected from the content list displayed on the page 2 of the second device 200, the first device 100 provides a coordinate of the content CC 6 and a control command to the second device 200. Based on the received coordinate and the received control command, the second device 200 provides a file of the content CC 6 to the first device 100 or a played image and a played sound of the content CC 6 to the first device 100.

The first device 100 outputs the received played image and sound of the second device 200, and the received played image is displayed as an image 7 on the page 2 of the second device 200. In this case, the second device 200 plays back the content selected by the first device 100 and stream a played image and a played sound of the played-back content to the first device 100.

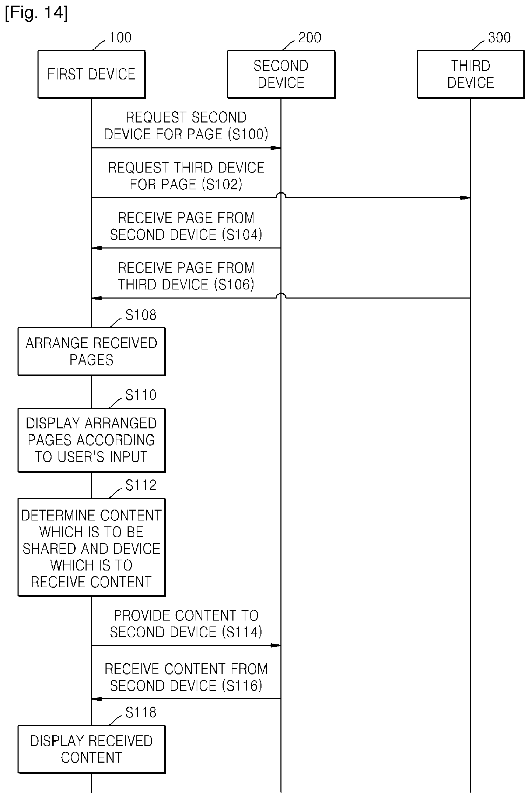

A method of sharing a page between devices according to an embodiment of the present invention is described with reference to FIG. 14.

FIG. 14 is a flowchart of a method of sharing a page between devices, according to an embodiment of the present invention.

In Steps 100 and 102, the first device 100 requests the second device 200 and the third device 300 for pages. A list of devices with which the first device 100 can share pages are displayed on the screen of the first device 100, and the first device 100 requests the second and third devices 200 and 300 for pages according to a user's input made based on the device list.

In Steps 100 and 102, when the first device 100 requests the second device 200 and the third device 300 for pages, the first device 100 provides an ID value of the first device 100 to the second or third device 200 or 300. The ID value of the first device 100 includes, but is not limited thereto, a MAC address, an SSID, a telephone number, and a user ID of the first device 100.

The first device 100 requests the second or third device 200 or 300 for a shared page via an SMS and an MMS, but the present invention is not limited thereto. For example, the first device 100 broadcasts a request for a shared page to the second device 200.

In Steps 104 and 106, the first device 100 receives pages from the second device 200 and the third device 300. In Steps 104 and 106, the first device 100 receives image data about a page which is sent to a display unit (not shown) of the second or third device 200 or 300, from the second or third device 200 or 300. The first device 100 receives image data about a page of the second device 200 which has been screen-captured in the second device 200, from the second or third device 200 or 300. The first device 100 also receives moving picture data encoded in units of preset time in the second or third device 200 or 300.

The second device 200 and the third device 300 allows page sharing in response to the page requests of the first device 100, and receives sharing-allowed pages from the second device 200 and the third device 300. The second device 200 and the third device 300 sets sharing-allowed pages separately. In this case, the first device 100 receives the sharing-allowed pages from among the pages of the second device 200 and the third device 300. Some of application icons displayed on pages of the second device 200 and the third device 300 are shared. In this case, only sharing-allowed pages are included in the pages of the second device 200 and the third device 300 that the first device 100 receives.

Thereafter, in Step 108, the first device 100 arranges pages of the first device 100, pages of the second device 200, and pages of the third device 300. The first device 100 arranges a plurality of pages of the first device 100 in a first direction, arrange a plurality of pages of the second device 200 in the first direction, and arrange a plurality of pages of the third device 300 in the first direction. The first device 100 arranges an array of the pages of the first device 100, an array of the pages of the second device 200, and an array of the pages of the third device 300 in a second direction. The first direction includes at least one of a horizontal direction, a vertical direction, and a diagonal direction, the second direction includes at least one of the horizontal direction, the vertical direction, and the diagonal direction, and the first direction and the second direction are different.

Then, in Step 110, the first device 100 displays the arranged pages according to a user's input. The first device 100 displays a single page on the screen thereof. When the displayed page is selected and moved in the first or second direction, the display unit 140 displays a page other than the displayed page on the screen. In Step 110, the first device 100 displays a page of the first device 100 on the screen thereof. When the displayed page of the first device 100 is dragged or flicked in the first direction, the first device 100 displays another page of the first device 100 on the screen of the first device 100. When the displayed page of the first device 100 is dragged or flicked in the second direction, the first device 100 displays a page of the second device 200 on the screen of the first device 100. The first device 100 displays both the page of the first device 100 and the page of the second device 200 on the screen of the first device 100, but the present invention is not limited thereto.

Then, in Step 112, the first device 100 determines content which is to be shared and a device which is to receive content. The first device 100 determines content which is to be shared and a device which is to provide content, based on a user's input made through a page displayed on the screen of the first device 100.

When an object displayed on a page of the first device 100 is selected and moved to a page of the second device 200, the first device 100 determines to provide the selected object to the second device 200.

For example, when content displayed on a page of the first device 100 is selected and moved to a page of the second device 200, the first device 100 determines to provide the selected content to the second device 200.

For example, when content being played back on a page of the first device 100 is selected and moved to a page of the second device 200, the first device 100 determines to provide a played image of the selected content to the second device 200.

For example, when content displayed on a page of the second device 200 is selected and moved to a page of the first device 100, the first device 100 determines to receive the selected content from the second device 200.

For example, when content being played back on a page of the second device 200 is selected and moved to a page of the first device 100, the first device 100 determines to receive a played image of the selected content from the second device 200.

Then, in Step 114, the first device 100 provides content to the second device 200. When an icon or an item of a content list is selected from a page of the first device 100 and moved to a page of the second device 200, the first device 100 provides the selected content to the second device 200. When content being played back on a page of the first device 100 is selected and moved to a page of the second device 200, the first device 100 provides a played image of the selected content to the second device 200.

Then, in Step 116, the first device 100 receives content from the second device 200. When an icon or an item of the content list is selected from a page of the second device 200 displayed on the screen of the first device 100 and moved to a page of the first device 100, the first device 100 receives the selected content from the second device 200.

When content being played back is selected from a page of the second device 200 displayed on the screen of the first device 100 and moved to a page of the first device 100, the first device 100 receives a played image of the selected content from the second device 200.

In this case, the first device 100 provides the second device 200 with a coordinate of an object selected from the page of the second device displayed on the screen of the first device 100 and a control command.

Then, in Step 118, the first device 100 displays the received content on the screen of the first device 100. The first device 100 plays back and display the received content on the screen thereof or receive and display a played image of the content on the screen thereof.

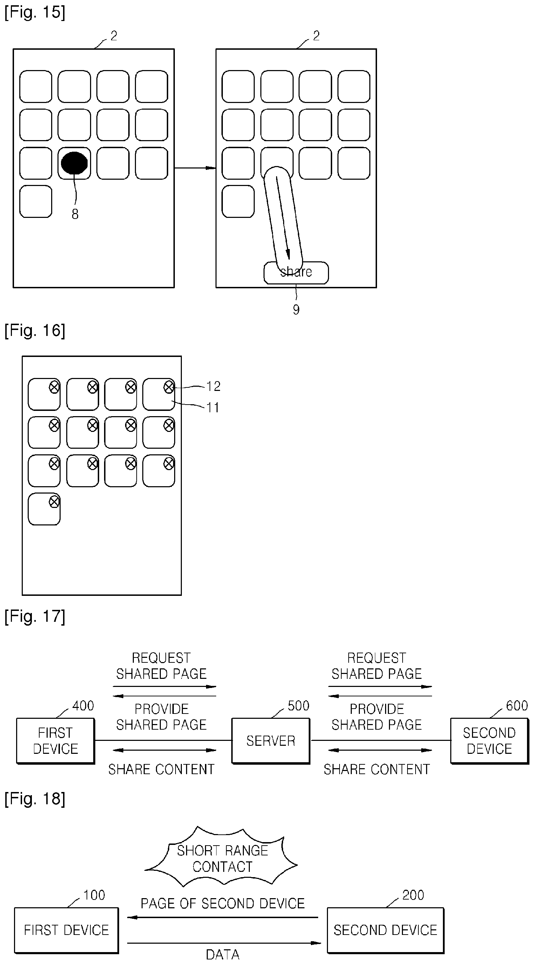

An example in which an object included in a page of the second device 200 displayed on the screen of the first device 100 is shared is described with reference to FIG. 15.

FIG. 15 is a diagram illustrating an example in which an object included in a page of the second device 200 displayed on the screen of the first device 100 is shared, according to an embodiment of the present invention.

Referring to FIG. 15, a page 2 of the second device 200 including a plurality of objects are displayed on the screen of the first device 100. When an object 8 displayed on the page 2 of the second device 200 is selected and moved to a region 9 for sharing, the second device 200 provides content corresponding to the selected object 8 to the first device 100.

In this case, the second device 200 provides a content file corresponding to the selected object 8 to the first device 100 or provide the first device 100 with information about a link from which the content file can be downloaded.

In addition, the second device 200 performs an application corresponding to the selected object 8 and provide an image regarding the executed application to the first device 100.

An example in which the second device 200 sets a shared page is described with reference to FIG. 16.

FIG. 16 is a diagram illustrating an example in which the second device 200 sets a shared page, according to an embodiment of the present invention.

As illustrated in FIG. 16, a plurality of objects are included in a page of the second device 200 displayed on the screen of the second device 200, and the second device 200 selects some of the objects and set the selected objects so that the selected objects can be shared with the first device 100.

In this case, a selection region 12 for selecting permission or non-permission of sharing is displayed on each of the objects 11 displayed on the page of the second device 200, and the second device 200 selects an object for sharing by touching a selection region 12 according to a user's input. When an object for sharing is selected, a page of the second device 200 to be provided to the first device 100 does not include unselected objects.

A system for sharing pages between devices according to an embodiment of the present invention is described with reference to FIG. 17.

FIG. 17 is a schematic diagram of a system for sharing pages between devices, according to an embodiment of the present invention.

Referring to FIG. 17, the system includes a first device 400, a second device 600, and a server 500. In the system, the first device 400 and the second device 600 shares pages with each other via the server 500.

The first device 400 requests the second device 600 to share pages, via the server 500, and the second device 600 transmits an ACK signal for the page sharing request to the first device 400 via the server 500.

The first device 400 receives a page of the second device 600 from the second device 600 via the server 500. In this case, the server 500 stores settings about pages of the second device 600, and edits a page received from the second device 600 according to the stored settings and provide the edited page to the first device 400. The first device 400 and the second device 600 shares content with each other via the server 500.

FIG. 18 is a diagram illustrating an example in which the first device 100 transmits data to the second device 200 via short range communication.

As shown in FIG. 18, when the first device 100 contacts the second device 200 within a short range, the second device 200 may provide the page of the second device 200 to the first device 100 via NFC communication. Also, the first device 100 may display the page of the second device 200. Such a contact within a short range means that the first device 100 approaches the second device 200 within a predetermined range. Also, when the user moves predetermined content on the page of the second device 200 displayed on the screen of the first device 100, the first device 100 may provide data of the predetermined content to the second device 200.

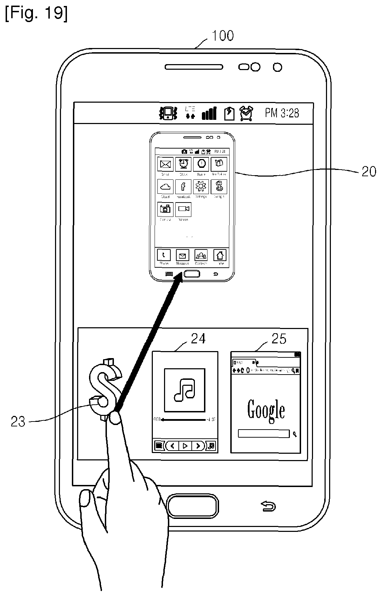

FIG. 19 is a diagram illustrating an example in which content is moved to a page 20 of the second device 200 displayed on the screen of the first device 100, according to an embodiment of the present invention.

Referring to FIG. 19, when the first device 100 contacts the second device 200 within a short range, the page 20 of the second device 200 may be displayed on top of the screen of the first device 100. The page 20 of the second device 200 may be a predetermined page, for example, a home screen of the second device 200 or a page currently displayed on the second device 200, but is not limited thereto.

Also, as the first device 100 contacts the second device 200 within a short range, the page 20 may be newly generated. In this case, the page 20 may be generated by the second device 200 to be provided to the first device 100, but an embodiment is not limited thereto. Alternatively, the page 20 may be generated by the first device 100 and provided to the second device 200, and the page 20 provided to the second device 200 may be displayed on the second device 200. Also, the page 20 may include information related to data to be provided to the second device 200. For example, when the second device 200 is a POS terminal at a store and the first device 100 contacts the second device in a short range, the page 20 may be newly generated and information about a name and price of a product may be included in the page 20, as information related to payment information.

Also, a plurality of icons indicating types of content that may be transmitted to the second device 200 may be displayed at the bottom of the screen of the first device 100. For example, an icon 23 for transmitting payment information, an icon 24 for transmitting a music file, and an icon 25 for transmitting a web page may be displayed at the bottom of the screen of the first device 100.

Also, when the user touches and drags a predetermined icon from among the plurality of icons to the page 20, the first device 100 may provide data corresponding to the touched predetermined icon to the second device 200. For example, when the user touches and drags the icon 23 for transmitting payment information to the page 20, the first device 100 may transmit credit card information required for payment to the second device 200.

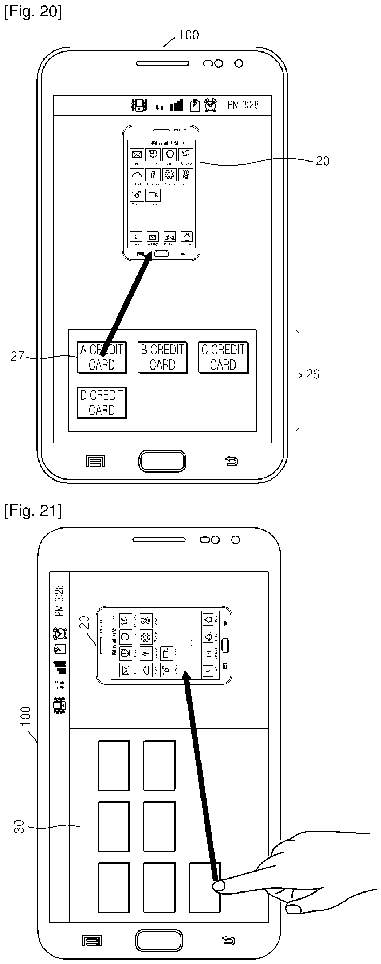

FIG. 20 is a diagram illustrating an example in which payment information is moved to the page 20 of the second device 200 displayed on the screen of the first device 100, according to an embodiment of the present invention.

Referring to FIG. 20, when the icon 23 for transmitting the payment information is touched on the screen of the first device 100 of FIG. 19, a credit card list 26 of the user of the first device 100 may be displayed at the bottom of the screen of the first device 100. Also, when the user touches and drags a predetermined credit card 27 on the credit card list 26 to the page 20 of the second device 200, the first device 100 may transmit credit card information about the predetermined credit card 27 to the second device 200.

FIG. 21 is a diagram illustrating an example in which a page 30 of the first device 100 and the page 20 of the second device 200 are displayed on the screen of the first device 100, and data related to a predetermined icon selected in the page 30 of the first device 100 is transmitted to the second device 200.

Referring to FIG. 21, as the first device 100 approaches the second device 200, the page 20 may be provided to the first device 100, and the page 30 of the first device 100 and the page 20 of the second device 200 may be displayed on the screen of the first device 100. Here, the pages 20 and 30 may be displayed together on the screen of the first device 100, but an embodiment is not limited thereto.

Also, an icon related to data that may be transmitted to the second device 200 via short range communication may be displayed on the page 30 of the first device 100. For example, the page 30 of the first device 100 may be a home screen of the first device 100 and may only display an icon related to transmission of data from among icons displayed on the home screen of the first device 100.

Alternatively, when the user selects and drags one of icons displayed on the page 30 of the first device 100 to the page 20 of the second device 200, data corresponding to the selected icon may be transmitted to the second device 200 via NFC communication.

According to the above-described embodiments of the present invention, devices shares pages with each other.

According to the above-described embodiments of the present invention, a device effectively displays a page of another device on the screen of the former device.

According to the above-described embodiments of the present invention, devices effectively shares contents with each other via a shared page.

The above-described embodiments of the present invention can also be embodied in a storage medium including instruction codes executable by a computer such as a program module executed by the computer. A computer readable medium can be any usable medium which can be accessed by the computer and includes all volatile/nonvolatile and removable/non-removable media. Further, the computer readable medium includes all computer storage and communication media. The computer storage medium includes all volatile/non-volatile and removable/non-removable media embodied by a certain method or technology for storing information such as computer readable instruction code, a data structure, a program module or other data. The communication medium typically includes the computer readable instruction code, the data structure, the program module, other data of a modulated data signal, or other transmission mechanism, and includes any information transmission medium.

While this invention has been shown and described with reference to certain embodiments thereof, it will be understood by those of ordinary skill in the art that various changes in form and detail may be made therein without departing from the scope of the invention as defined by the appended claims.

## Claims

1. A method by which a first device (100) shares a page with a second device (200), the first device (100) comprising a display unit (140) configured to display a screen including a page of a device, the method comprising:
receiving (S104) a plurality of pages from the second device (200);
arranging (S108) a plurality of pages of the first device (100) in a first array in a first direction and arranging (S108) the plurality of pages of the second device (200) in a second array in the first direction, and arranging (S108) the first array and the second array in a second direction different to the first direction;
displaying (S110) a screen including one of a page of the first device (100) and a page of the second device (200);
when a flick or drag of the displayed page in the second direction is received, removing the displayed page and displaying, on the screen, the other one of the page of the first device (100) and the page of the second device (200); and
when a flick or drag of the displayed page in the first direction is received, removing the displayed page and displaying, on the screen, another page of that device.

2. The method of claim 1, wherein the first direction includes at least one of a horizontal direction, a vertical direction, and a diagonal direction, the second direction includes at least one of the horizontal direction, the vertical direction, and the diagonal direction.

3. The method of claim 1 wherein the page includes an object, and comprising:
selecting (S112) an object displayed on a page of the first device (100) and moving the selected object to a page of the second device (200), based on a user input; and
providing (S114) the selected object to the second device (200).

4. The method of claim 3, wherein providing (S114) the selected object further comprises, when content displayed on the page of the first device (100) is selected and moved to the page of the second device (200), providing the selected content to the second device (200).

5. The method of claim 3, wherein providing (S114) the selected object further comprises, when content displayed on the page of the first device (100) is selected and moved to the page of the second device (200), providing link information for downloading the selected content to the second device (200).

6. The method of claim 3, wherein providing (S114) the selected object further comprises, when content being played back on the page of the first device (100) is selected and moved to the page of the second device (200), providing at least one of a played image and a played sound of the content to the second device (200).

7. A first device (100) arranged to share a page with a second device (200), the first device (100) comprising;
a display unit (140) configured to display a screen including a page of a device;
a shared page receiving unit (120) configured to receive (S104) a plurality of pages from the second device (200); and
a control unit (180) configured to:
arrange (S108) a plurality of pages of the first device (100) in a first array in a first direction and arrange (S108) the plurality of pages of the second device (200) in a second array in the first direction, and arrange (S108) the first array and the second array in a second direction different to the first direction;
control the display unit (140) to display (S110) a screen including one of a page of the first device (100) and a page of the second device (200);
when a flick or drag of the displayed page in the second direction is received, control the display unit (140) to remove the displayed page and to display, on the screen, the other one of the page of the first device (100) and the page of the second device (200); and
when a flick or drag of the displayed page in the first direction is received, control the display unit (140) to remove the displayed page and to display, on the screen, another page of that device.

8. The first device (100) of claim 7, wherein a page of a device is one of a wallpaper page in which icons for executing an application are displayed, a web page, a content list page, and a played page of content.

9. A computer readable recording medium having recorded thereon a computer program for executing a method of any of claims 1 to 6.

## Patentansprüche

1. Verfahren, durch welches eine erste Vorrichtung (100) eine Seite für eine zweite Vorrichtung (200) freigibt, wobei die erste Vorrichtung (100) eine Anzeigeeinheit (140) umfasst, die dazu konfiguriert ist, einen Bildschirm anzuzeigen, der eine Seite einer Vorrichtung einschließt, wobei das Verfahren Folgendes umfasst:
Empfangen (S104) einer Vielzahl von Seiten von der zweiten Vorrichtung (200); Anordnen (S108) einer Vielzahl von Seiten der ersten Vorrichtung (100) in einer ersten Anordnung in einer ersten Richtung und Anordnen (S108) der Vielzahl von Seiten der zweiten Vorrichtung (200) in einer zweiten Anordnung in der ersten Richtung, und Anordnen (S108) der ersten Anordnung und der zweiten Anordnung in einer zweiten Richtung, die sich von der ersten Richtung unterscheidet;
Anzeigen (S110) eines Bildschirms, der eines von einer Seite der ersten Vorrichtung (100) und einer Seite der zweiten Vorrichtung (200) einschließt;
wenn ein Wischen oder Ziehen der angezeigten Seite in die zweite Richtung empfangen wird, Entfernen der angezeigten Seite und Anzeigen der anderen der Seite von der ersten Vorrichtung (100) und der Seite von der zweiten Vorrichtung (200) auf dem Bildschirm; und
wenn ein Wischen oder Ziehen der angezeigten Seite in die erste Richtung empfangen wird, Entfernen der angezeigten Seite und Anzeigen einer anderen Seite dieser Vorrichtung auf dem Bildschirm.

2. Verfahren nach Anspruch 1, wobei die erste Richtung mindestens eines von einer horizontalen Richtung, einer vertikalen Richtung und einer diagonalen Richtung einschließt, wobei die zweite Richtung mindestens eines von der horizontalen Richtung, der vertikalen Richtung und der diagonalen Richtung einschließt.

3. Verfahren nach Anspruch 1, wobei die Seite ein Objekt einschließt und Folgendes umfasst: Auswählen (S112) eines Objekts, das auf einer Seite der ersten Vorrichtung (100) angezeigt wird, und Bewegen des ausgewählten Objekts zu einer Seite der zweiten Vorrichtung (200) auf der Basis einer Benutzereingabe; und Bereitstellen (S114) des ausgewählten Objekts an die zweite Vorrichtung (200).

4. Verfahren nach Anspruch 3, wobei das Bereitstellen (S114) des ausgewählten Objekts ferner Folgendes umfasst: wenn ein Inhalt, der auf der Seite der ersten Vorrichtung (100) angezeigt wird, ausgewählt und zu der Seite der zweiten Vorrichtung (200) bewegt wird, Bereitstellen des ausgewählten Inhalts an die zweite Vorrichtung (200).

5. Verfahren nach Anspruch 3, wobei das Bereitstellen (S114) des ausgewählten Objekts ferner Folgendes umfasst: wenn ein Inhalt, der auf der Seite der ersten Vorrichtung (100) angezeigt wird, ausgewählt und zu der Seite der zweiten Vorrichtung (200) bewegt wird, Bereitstellen von Verknüpfungsinformationen zum Herunterladen des ausgewählten Inhalts an die zweite Vorrichtung (200).

6. Verfahren nach Anspruch 3, wobei das Bereitstellen (S114) des ausgewählten Objekts ferner Folgendes umfasst: wenn ein Inhalt, der auf der Seite der ersten Vorrichtung (100) wiedergegeben wird, ausgewählt und zu der Seite der zweiten Vorrichtung (200) bewegt wird, Bereitstellen von mindestens einem von einem abgespielten Bild und einem abgespielten Ton des Inhalts an die zweite Vorrichtung (200).

7. Erste Vorrichtung (100), die dazu ausgelegt ist, eine Seite für eine zweite Vorrichtung (200) freizugeben, wobei die erste Vorrichtung (100) Folgendes umfasst:
eine Anzeigeeinheit (140), die dazu konfiguriert ist, einen Bildschirm anzuzeigen, der eine Seite einer Vorrichtung einschließt;
eine Empfangseinheit (120) einer freigegebenen Seite, die dazu konfiguriert ist, eine Vielzahl von Seiten von der zweiten Vorrichtung (200) zu empfangen (S104); und eine Steuereinheit (180), die zu Folgendem konfiguriert ist:
Anordnen (S108) einer Vielzahl von Seiten der ersten Vorrichtung (100) in einer ersten Anordnung in einer ersten Richtung und Anordnen (S108) der Vielzahl von Seiten der zweiten Vorrichtung (200) in einer zweiten Anordnung in der ersten Richtung und Anordnen (S108) der ersten Anordnung und der zweiten Anordnung in einer zweiten Richtung, die sich von der ersten Richtung unterscheidet;
Steuern der Anzeigeeinheit (140) dazu, einen Bildschirm anzuzeigen (S110), der eines von einer Seite der ersten Vorrichtung (100) und einer Seite der zweiten Vorrichtung (200) einschließt;
wenn ein Wischen oder Ziehen der angezeigten Seite in die zweite Richtung empfangen wird, Steuern der Anzeigeeinheit (140) dazu, die angezeigte Seite zu entfernen und die andere von der Seite der ersten Vorrichtung (100) und der Seite der zweiten Vorrichtung (200) auf dem Bildschirm anzuzeigen; und
wenn ein Wischen oder Ziehen der angezeigten Seite in die erste Richtung empfangen wird, Steuern der Anzeigeeinheit (140) dazu, die angezeigte Seite zu entfernen und eine andere Seite dieser Vorrichtung auf dem Bildschirm anzuzeigen.

8. Erste Vorrichtung (100) nach Anspruch 7, wobei eine Seite einer Vorrichtung eines von einer Hintergrundbildseite, in welcher Symbole zum Ausführen einer Anwendung angezeigt werden, einer Webseite, einer Inhaltslistenseite und einer abgespielten Inhaltsseite ist.

9. Computerlesbares Aufzeichnungsmedium, das ein darauf aufgezeichnetes Computerprogramm zum Ausführen eines Verfahrens nach einem der Ansprüche 1 bis 6 aufweist.

## Revendications

1. Procédé par lequel un premier dispositif (100) partage une page avec un deuxième dispositif (200), le premier dispositif (100) comprenant une unité d'affichage (140) configurée pour afficher un écran incluant une page d'un dispositif, le procédé comprenant :
la réception (S104) d'une pluralité de pages provenant du deuxième dispositif (200) ; l'agencement (S108) d'une pluralité de pages du premier dispositif (100) dans un premier ensemble dans une première direction et l'agencement (S108) de la pluralité de pages du deuxième dispositif (200) dans un deuxième ensemble dans la première direction, et l'agencement (S108) du premier ensemble et du deuxième ensemble dans une deuxième direction différente de la première direction ;
l'affichage (S110) d'un écran incluant l'une d'une page du premier dispositif (100) et d'une page du deuxième dispositif (200) ;
quand un feuilletage ou un glisser de la page affichée dans la deuxième direction est reçu, la suppression de la page affichée et l'affichage, sur l'écran, de l'autre parmi la page du premier dispositif (100) et la page du deuxième dispositif (200) ; et
quand un feuilletage ou un glisser de la page affichée dans la première direction est reçu, la suppression de la page affichée et l'affichage, sur l'écran, d'une autre page de ce dispositif.

2. Procédé selon la revendication 1, dans lequel la première direction inclut au moins l'une d'une direction horizontale, une direction verticale et une direction diagonale, la deuxième direction inclut au moins l'une de la direction horizontale, la direction verticale, et la direction diagonale.

3. Procédé selon la revendication 1, dans lequel la page inclut un objet, et comprenant : la sélection (S112) d'un objet affiché sur une page du premier dispositif (100) et le déplacement de l'objet sélectionné vers une page du deuxième dispositif (200), sur la base d'une entrée d'utilisateur ; et la délivrance (S114) de l'objet sélectionné au deuxième dispositif (200).

4. Procédé selon la revendication 3, dans lequel la délivrance (S114) de l'objet sélectionné comprend en outre, quand un contenu affiché sur la page du premier dispositif (100) est sélectionné et déplacé vers la page du deuxième dispositif (200), la délivrance du contenu sélectionné au deuxième dispositif (200).

5. Procédé selon la revendication 3, dans lequel la délivrance (S114) de l'objet sélectionné comprend en outre, quand un contenu affiché sur la page du premier dispositif (100) est sélectionné et déplacé vers la page du deuxième dispositif (200), la délivrance d'informations de lien pour télécharger le contenu sélectionné sur le deuxième dispositif (200).

6. Procédé selon la revendication 3, dans lequel la délivrance (S114) de l'objet sélectionné comprend en outre, quand un contenu en cours de relecture sur la page du premier dispositif (100) est sélectionné et déplacé vers la page du deuxième dispositif (200), la délivrance d'au moins l'un d'une image lue et d'un son lu du contenu au deuxième dispositif (200).

7. Premier dispositif (100) agencé pour partager une page avec un deuxième dispositif (200), le premier dispositif (100) comprenant ;
une unité d'affichage (140) configurée pour afficher un écran incluant une page d'un dispositif ;
une unité de réception de page partagée (120) configurée pour recevoir (S104) une pluralité de pages en provenance du deuxième dispositif (200) ; et une unité de commande (180) configurée pour :
agencer (S108) une pluralité de pages du premier dispositif (100) dans un premier ensemble dans une première direction et agencer (S108) la pluralité de pages du deuxième dispositif (200) dans un deuxième ensemble dans la première direction, et agencer (S108) le premier ensemble et le deuxième ensemble dans une deuxième direction différente de la première direction ;
commander à l'unité d'affichage (140) d'afficher (S110) un écran incluant l'une d'une page du premier dispositif (100) et d'une page du deuxième dispositif (200) ;
quand un feuilletage ou un glisser de la page affichée dans la deuxième direction est reçu, commander à l'unité d'affichage (140) de supprimer la page affichée et d'afficher, sur l'écran, l'autre parmi la page du premier dispositif (100) et la page du deuxième dispositif (200) ; et
quand un feuilletage ou un glisser de la page affichée dans la première direction est reçu, commander à l'unité d'affichage (140) de supprimer la page affichée et d'afficher, sur l'écran, une autre page de ce dispositif.

8. Premier dispositif (100) selon la revendication 7, dans lequel une page d'un dispositif est l'une d'une page de papier peint sur laquelle des icônes destinés à exécuter une application sont affichés, une page Web, une page de liste de contenus, et une page lue de contenu.

9. Support d'enregistrement lisible par ordinateur, sur lequel est enregistré un programme informatique destiné à exécuter le procédé selon l'une quelconque des revendications 1 à 6.
